(19) Europäisches Patentamt

European Patent Office

Office européen des brevets

(11) **EP 0 913 018 B1**

(12) **EUROPÄISCHE PATENTSCHRIFT**

(45) Veröffentlichungstag und Bekanntmachung des Hinweises auf die Patenterteilung:
**21.11.2001 Patentblatt 2001/47**

(21) Anmeldenummer: **97927156.6**

(22) Anmeldetag: **07.06.1997**

(51) Int Cl.$^7$: **H02H 9/02**, H01F 36/00

(86) Internationale Anmeldenummer:
**PCT/EP97/02976**

(87) Internationale Veröffentlichungsnummer:
**WO 98/02949 (22.01.1998 Gazette 1998/03)**

(54) **SUPRALEITENDER KURZSCHLUSSSTROMBEGRENZER**

SUPERCONDUCTING SHORT-CIRCUIT CURRENT LIMITER

LIMITEUR SUPRACONDUCTEUR DE COURANT DE COURT-CIRCUIT

(84) Benannte Vertragsstaaten:
**AT CH DE FR IT LI**

(30) Priorität: **13.07.1996 DE 19628358**

(43) Veröffentlichungstag der Anmeldung:
**06.05.1999 Patentblatt 1999/18**

(73) Patentinhaber: **Forschungszentrum Karlsruhe GmbH**
**76133 Karlsruhe (DE)**

(72) Erfinder: **GERHOLD, Jürgen**
**A-8042 Graz (AT)**

(56) Entgegenhaltungen:
**FR-A- 2 714 229**

• **TIXADOR P ET AL: "HYBRID AC SUPERCONDUCTING CURRENT LIMITER: SMALL-SCALE EXPERIMENTAL MODEL" IEE PROCEEDINGS: GENERATION, TRANSMISSION AND DISTRIBUTION, Bd. 141, Nr. 2, PART C, 1.März 1994, Seiten 117-124, XP000452049**
• **TIXADOR P ET AL: "HYBRID SUPERCONDUCTING A.C., CURRENT LIMITER EXTRAPOLATION 63 KV-1 250 A" JOURNAL DE PHYSIQUE III, Bd. 4, Nr. 4, 1.April 1994, Seiten 603-614, XP000446861**
• **PATENT ABSTRACTS OF JAPAN vol. 095, no. 004, 31.Mai 1995 & JP 07 006683 A (NGK INSULATORS LTD), 10.Januar 1995,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft einen supraleitenden Kurzschlußstrombegrenzer.

Die Beherrschung von Kurzschlüssen in elektrischen Versorgungsnetzen verursacht mit deren zunehmender Erweiterung und Verflechtung höhere Kosten. Mit den derzeit üblichen Maßnahmen wie angepaßte Kurzschlußspannungen der Transformatoren und ausreichende Leitungsimpedanzen, schnelle Leistungsschalter mit Ausschaltströmen zum Teil weit über 50 kA sowie eingefügte Kurzschlußbegrenzungsdrosseln werden die elektrischen Versorgungsnetze nicht mehr adäquat geschützt werden können, vor allem dann nicht, wenn im Zuge von Deregulierungen die Netzkonfigurationen und Netzbetriebszustände nicht mehr mit Rücksicht auf gegebene Kurzschlußfestigkeiten von Anlagen frei wählbar sein werden. Hohe Spannungssteifigkeit im Betrieb ist mit kurzschlußstrombegrenzenden Impedanzen im Grund nicht verträglich. Daher sind neue Kurzschlußschutzmethoden gefordert.

Konventionell wurde z. B. die Strombegrenzung mit der First-Zero-Interrupter (FZI)-Technik vorgeschlagen. Ihr wesentlicher Nachteil ist das ungehinderte Auftreten der unter Umständen hohen Stoßkurzschlußamplitude. Durch sie werden die Anlagenkomponenten mit starken mechanischen Kräften belastet und sind dadurch gefährdet.

Es ist das Ziel, bereits den Stoßkurzschlußstrom zu begrenzen bzw. abzufangen. Das fordert einen Strombegrenzer, der beim Übersteigen eines vorgegebenen Strompegels sofort anspricht. Insbesondere bei supraleitenden Baukomponenten im zu schützenden Netz ist ein rasch einsetzender Überstromschutz zwingend.

Strombegrenzer mit derartiger Eigenschaft sind die supraleitenden Fehlerstrombegrenzer (superconducting fault current limiter, SCFCL). Hierfür wurden u. a. Transformatoren, die mit ihrer Primärwicklung an vorgesehener Stelle eines zu schützenden Netzes angeschlossen sind, vorgeschlagen. Sie haben eine supraleitende Sekundärwicklung, z. B. in Form eines Zylinders, die im Kurzschluß betrieben wird. Beide Wicklungen sitzen auf einem Eisenkern und sind daher bis zur Eisensättigung magnetisch stark miteinander gekoppelt.

Das Wirkungsprinzip eines solchen supraleitenden Kurzschlußstrombegrenzers beruht darauf, daß nach Überschreitung des Nennstroms $I_N$ in der Primärwicklung in kürzester Zeit beim weiteren Anstieg des Stromes über den Ansprechstrompegel $I_T$ hinaus eine von Null rasch in Richtung auf ihren Endwert ansteigende Impedanz Z(t) im Kurzschlußkreis aufgebaut wird, die den Strom auf einen zulässigen Strompegel

$$I_{lim} = U/Z_{lim}$$

begrenzt. U ist in erster Näherung die als starr angesehene Netzspannung. (Bei einem niederohmig geerdeten Drehstromnetz muß zum wirksamen Schutz jede Phase mit einem solchen Kurzschlußstrombegrenzer versehen werden.)

J. Acero et al. beschreiben auf den Seiten 1071 bis 1074 unter dem Titel "Current Limiter Based on Melt Processed YBCO Bulk Superconductors" in IEEE Trans. on Appl. Superconductivity, Vol. 5, No. 2, June 1995 die Auslegung und die Herstellung eines supraleitenden Strombegrenzers.

Über den Test eines mit einem Drei-Schenkel-Joch symmetrisch aufgebauten 100kW Hoch-$T_C$ Supraleiter-Kurzschlußstrombegrenzers berichten W. Paul et al. in derselben Zeitschrift auf den Seiten 1059 bis 1062.

In der DE-OS 195 24 579 wird ein Transformator als Strombegrenzer vorgestellt, bei dem der im Störfall zu begrenzender Strom durch die Primärspule fließt und ein supraleitender Ring als Sekundärspule vorgesehen ist. Der Ring wird in einem Kühlgefäß unter die Sprungtemperatur abgekühlt. Er ist als dünne ringförmige Schicht auf einem Trägerzylinder aufgebracht und bildet mit diesem einen Verbundkörper.

Grundsätzlich ist der gegenständliche supraleitende Kurzschlußstrombegrenzer ein Längstransformator, der als nichtlinear stromabhängige Impedanz wirkt. Seine Wirkungsweise ist die folgende:

Die Primärwicklung des Transformators wird in die zu schützende Leitung eingebaut. Sie liegt an der Netzspannung. Der Leitungsstrom ist also der Primärstrom $I_P$ des Transformators. Im Normalbetrieb, d. h. vom Leerlauf bis zum Nennstrom, wird die kurzgeschlossene, supraleitende Sekundärwicklung stets bis zur völligen Primärflußkompensation gegenerregt. Baulich ist die Sekundärwicklung eine kurzgeschlossene Spule oder ein Kurzschlußring oder ein Kurzschlußzylinder. Letzterer ist für die Herstellung aus Hochtemperatursupraleitermaterial sehr geeignet.

Der ideale Transformator erzeugt im Normalbetrieb keinen Spannungsabfall an seiner Primärwicklung, da der Fluß im Eisen Null ist. Streufluß existiert nicht oder allenfalls vernachlässigbar. Beim Überschreiten des Ansprechpegelstroms IT wird auch der kritischer Strom $I_{s\ krit}$, d. h. die Grenze der supraleitenden Stromtragfähigkeit im Supraleiter erreicht. Der Sekundärstrom kann von da an auch selbst bei guter Kühlung nicht mehr weiter ansteigen. Dadurch baut sich im Eisenkern des Transformators in Abhängigkeit des Netzkurzschlußstromes ein Magnetfeldfluß auf, der in der Primärwicklung eine den Kurzschlußstrom begrenzende Gegenspannung aufbaut. Gleichzeitig wird in der Sekundärwicklung eine Spannung induziert, die zusammen mit dem noch in der Supraleiterwicklung fließenden Reststrom Verlustwärme produziert und den Supraleiter aufheizt.

Zur Begrenzung unzulässig hoher Schaltüberspannungen im Netz ist zusätzlich eine normalleitende Tertiärwicklung auf den Eisenkern gewickelt.

Bei den üblichen Dimensionierungen für die Baugröße eines solchen Längstransformators war die Netzspannung und der Nennstrom in der Netzleitung maßgebend. Eisensättigung war zu vermeiden und die Querschnitte auf unsymmetrische Kurzschlüsse auszulegen, d. h. der Eisenquerschnitt lag dann bei dem Doppelten dessen eines entsprechenden Leistungstransformators. Das führte zu unerwünscht hohen Eisengewichten.

Die Aufgabe, die der Erfindung zugrunde liegt, ist, einen supraleitenden Kurzschlußstrombegrenzer zu bauen, der das folgende Anforderungsprofil erfüllt:

- verschwindende oder unerhebliche Impedanz und Wirkverluste im Normalbetrieb;
- definierte Impedanz im Kurzschluß und tragbare Wirkverluste während der Dauer des Kurzschlusses;
- zeitliche Steuerung des Impedanzaufbaus Z(t) derart, daß der Stoßkurzschlußstrom mit Sicherheit begrenzt bleibt, andererseits aber keine unzulässig hohen Überspannungen ausgelöst werden;
- rasche Verfügbarkeit nach Kurzschlußende;
- kompakte Bauweise mit möglichst geringem Gewicht;
- hohe Betriebssicherheit im Langzeitbetrieb, unveränderte Einstelldaten während der Nutzungsdauer;
- selbsttätiger Funktionsablauf.

Die Aufgabe wird durch einen gattungsgemäßen Längstransformator mit den Merkmalen des Anspruchs 1 gelöst.

Der mit zwei schmalen Spalten versehene, im übrigen geschlossene Eisenkern wird hierzu an vorgegebener Stelle oder über vorgegebene Bereiche in seinem Querschnitt klein gehalten, so daß das Eisen nach Überschreiten eines kritischen Stromes, der über dem Nennstrom für die zu schützende Leitung liegt, infolge mangelnder Gegenerregung in der Sekundärwicklung nach Erreichen des kritischen Supraleiterstroms und damit beginnendem Magnetflußaufbau im Eisenkern scharf in Sättigung geht.

Mit Rücksicht auf Schaltüberströme spricht der supraleitende Fehlerstrombegrenzer (SCFCL) bei einem vorgegebenen Vielfachen der Nennstromamplitude, z. B. beim der zweifachen Nennstromamplitude, eventuell sogar noch darüber, an. Diesem kritischen Vielfachen der Nennstromamplitude ist unter Berücksichtigung der Transformatorübersetzung die Höhe des kritische Strom $I_{skrit}$ im Supraleiter der Sekündärwicklung zugrunde zu legen. Dadurch erfolgt darüber hinaus die Aufhebung der für den Normalbetrieb geforderten engen magnetischen Kopplung zwischen der Primär- und Sekundärwicklung, weil dann zwar für den magnetischen Fluß noch ein Weg im ungesättigtem Eisenbereich, sonst aber nur noch der Luftweg für den die Primärwicklung mit der Tertiärwicklung verkettenden Fluß besteht.

Die zur Dämpfung transienter Vorgänge eingebaute, widerstandsbehaftete Tertiärwicklung ist räumlich in unmittelbarer Nähe zur Primärwicklung angebracht, damit sie stets und insbesondere im Kurzschlußfall oder Fehlerfall über das dann vorhandene magnetische Feld der Primärwicklung stark magnetisch gekoppelt ist. Darüber hinaus ist sie so ausgelegt, daß sie eine ausreichende Wärmekapazität bildet, damit sie die durch den Ausgleichsstrom in ihr erzeugte Joule'sche Wärme ohne Beeinträchtigung und ohne technischen Wärmeabfuhraufwand aufnehmen kann.

Eine vorteilhafte Bauweise, die sehr gewichtssparend ist, ist in Anspruch 2 gekennzeichnet. Der Eisenkern des Transformators ist im Bereich der Primärwicklung hohl und hat lediglich die Wandstärke, damit er bis zum Ansprechstrompegel nicht in Sättigung geht; z. B. könnte der Eisenkern spiralig aus Transformatorblech gewickelt sein, wodurch verlustproduzierende

Ringströme unterbunden werden und dennoch eine einfache Herstellung gegeben ist. Gleichzeitig ist dort koaxial zur Primärwicklung die Tertiärwicklung untergebracht, so daß die Forderung der magnetisch starken Kopplung stets erfüllt ist, aber auch der notwendige Ausgleichsstrom erzeugt wird bzw. fließt. Hierzu besteht die Tertiärwicklung aus einem Material mit hohem spezifischen Widerstand wie Messing oder Widerstandsdraht. Das aber ist eine Auslegungsaufgabe, die sich am erforderlichen ohmschen Widerstand, notwendiger Wärmekapazität und zulässigem konstruktiven Aufbau orientiert.

Da die Sekundärwicklung ein supraleitendes Bauteil ist, ist eine kryotechnische Einrichtung zu ihrer Kühlung vorzusehen. Die Kälteleistung ist vom maximalen Bedarf im Kurzschlußfall und von den Kälteverlusten im Normalbetrieb abhängig, letztere werden durch zwei Unterbrechungen der Wärmeleitwege im Eisen klein gehalten (Anspruch 1). Hierzu wird der Eisenkern außerhalb der Sekundärwicklung an beiden Seiten durch einen schmalen Luftspalt unterbrochen und, falls technisch notwendig, werden diese mit einem Wärmedämmittel bzw. einer hochisolierenden Tieftemperaturisolierung ausgefüllt (Anspruch 3).

Anspruch 4 kennzeichnet die Anpassung des Eisenquerschnitts im Bereich der supraleitenden Sekundärwicklung derart, daß dort der Eisenkern möglichst nahe an den Supraleiterkurzschlußzylinder herankommt, damit der Streufluß im Normalbetrieb unbedeutend zu halten ist.

Die Sekundärwicklung besteht bevorzugt aus einem Supraleiterkurzschlußzylinder. Das Supraleitermaterial ist ein Hochtemperatursupraleiter, der sich leicht durch Beschichtungstechniken auf dem dafür vorgesehenen zylindrischen Träger aufbringen läßt. Es können aber auch in der Fachsprache unter dem Begriff "Bulk-Zylinder" bekannte Kurzschlußzylinder als kommerziell erhältliche Baukomponten mit Vorteil eingesetzt werden. Ein herkömmlicher, kurzgeschlossener Spulenwickel, im einfachsten Fall ein Kurzschlußring, ist ebenfalls eine technische Lösung (Anspruch 5) für die Sekundärwicklung.

Die Erfindung wird nachstehend anhand der in der Zeichnung aufgeführten schematischen Darstellungen erläutert.

Es zeigt:

Figur 1 den Kurzschlußstrombegrenzer grundsätzlich,

Figur 2 den Kurzschlußstrombegrenzer mit hohlzylindrischen Eisenkernbereichen,

Figur 3 den Kurzschlußstrombegrenzer im Ersatzschaltbild.

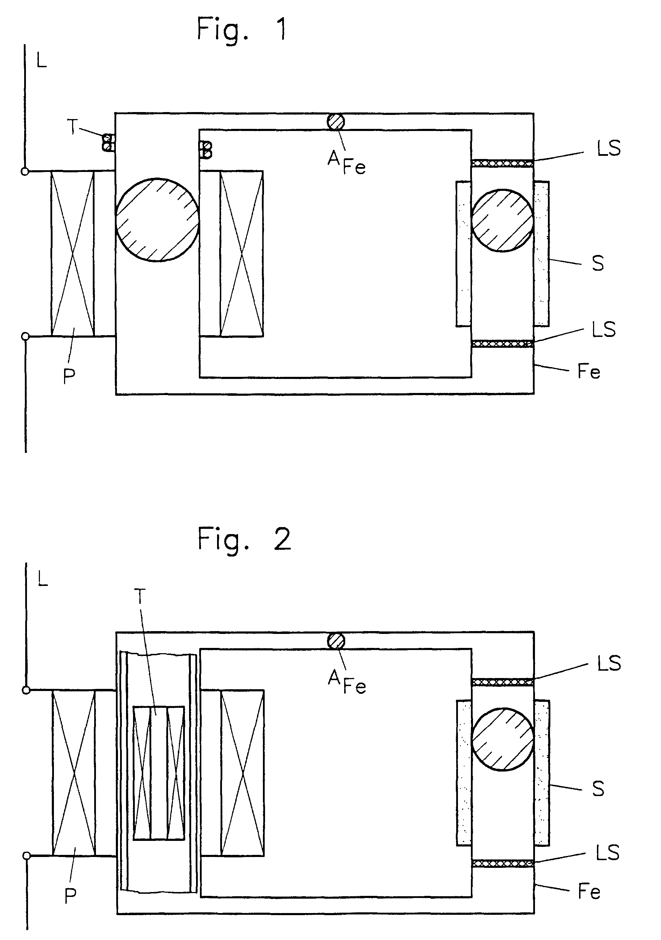

Der Längstransformator zur Kurzschlußstrombegrenzung stellt im normalen Betriebszustand, also vom Leerlauf bis zum Ansprechstrompegel $I_T$, einen sekundärseitig kurzgeschlossenen Transformator dar. Er ist in der Arbeitsweise einem Stromwandler vergleichbar und daher auch mit seiner Primärwicklung P in der zu schützenden Leitung L längs eingebaut (Figur 1 und 2), d. h. der Leitungsstrom ist stets der Primärstrom Ip in dem Transformator.

Im Normalbetrieb besteht eine enge magnetische Kopplung zwischen der Primär- P und Sekundärwicklung S (Supraleiterkurzschlußzylinder). Diese Kopplung wird durch den Eisenkern Fe erreicht. Im Normalbetrieb soll keine Spannung induziert werden, deshalb muß sich der in der Primär- und Sekundärwicklung erzeugte und durch den Eisenkern Fe gebündelte Fluß kompensieren. Der Streufluß des Transformator ist im Normalbetrieb unbedeutend, weil der Eisenkern Fe im Bereich der Wicklungen unter Berücksichtigung der Spannungsfestigkeit nah an denselben verläuft. Eine als Kurzschlußzylinder ausgeführte Sekundärwicklung ist besonders vorteilhaft, da in ihr lediglich Niederspannung auftritt.

Die kompensierende Gegenerregung in der Sekundärwicklung S kann nur bis zum Erreichen des kritischen Stromes $I_{s\ krit}$ erfolgen. Für die Auslegung orientiert sich der kritische Strom $I_{s\ krit}$ im Supraleiterkurzschlußzylinder S unter Einbeziehung der Übersetzungsverhältnisse am Ansprechpegelstrom $I_T$, welcher, je nach Netzsituation und angewandter Schutzphilosophie, ein Vielfaches des zu führenden Nennstroms $I_N$ in der Primärwicklung ist.

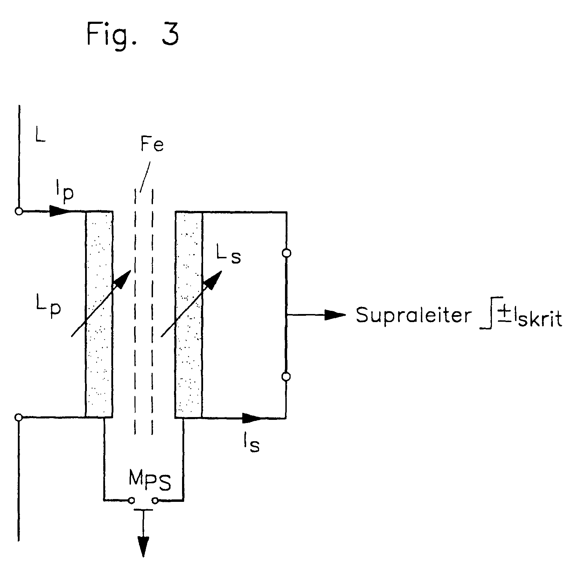

Kurzschlußströme größer als der Nennstrom $I_N$ sollen einerseits sicher auf einen höchst zulässigen Strom $I_{lim}$ begrenzt werden können, was durch Beschränkung der sekundären Gegenerregung bei Erreichen des kritischen Supraleiterstroms $I_{s\ krit}$ und damit eingeleitetem Magnetflußaufbau in der Primärwicklung sichergestellt wird. Andererseits soll im Fehler- bzw. Kurzschlußfall die Verlustwärmeproduktion in der Sekundärwicklung begrenzt bleiben. Hierzu muß die magnetische Entkopplung der Sekundär- von der Primärwicklung entsprechend stark und schnell erfolgen. Das gelingt, wenn der Querschnitt $A_{Fe}$ des Eisenkerns Fe an mindestens einer Stelle, über einen festgelegten Bereich hinweg so klein gehalten wird, daß Sättigung ab dem vorgesehenen Ansprechstrompegel $I_T$ bzw. bei einem deswegen auftretenden magnetischen Fluß im kleinen Eisenquerschnitt einsetzt. Dadurch entkoppeln sich die beiden Wicklungen P und S magnetisch voneinander. Der Strom in der Netzleitung L erfährt dann plötzlich eine Längsimpedanz Z(t) in Form nur der Primärwicklung, die auf den Fehlerstrom $I_{lim}$ zu begrenzen vermag. In diesem Strombereich $I > I_T$ wirkt die von der Sekundärwicklung S entkoppelte Primärwicklung P als Drossel oder allgemein als strombegrenzende Impedanz. In ungesättigten Eisenkernbereichen findet zwar noch Bündelung von Magnetfeldlinien statt, sonst aber besteht für den Magnetfluß lediglich der Luftweg. Die magnetische Kopplung beider Wicklungen P und S über den Luftweg ist im Fehlerfall äußerst gering bzw. unbedeutend, da die Sekundärwicklung räumlich weitentfernt von der Primärwicklung ist. Die Eisensättigung im kleinen Eisenquerschnitt $A_{Fe}$ stellt gewissermaßen einen magnetischen Schalter $M_{ps}$ (siehe Fig. 3) dar, d. h., die Gegeninduktivität $M_{ps}$ ist nichtlinear primärstromabhängig, sie verschwindet für Ströme, die den Ansprechstrompegel $I_T$ übersteigen.

Durch die Entkopplung der Sekundärwicklung S wird keine weitere Spannung in ihr induziert, so daß die Erwärmung des Supraleiterkurzschlußzylinders S in Grenzen bleibt. Es entstehen dann auch keine weiteren Verluste.

Figur 2 zeigt schematisch den hohlen, geblechten Eisenkern Fe mit geringem Querschnitt im Bereich der Primärwicklung P. Zur Unterdrückung von Wirbelstromverlusten infolge von Ringströmen kann er ein spiralig aus Trafoblech gewickelter Hohlzylinder sein. Darüber hinaus kann es Eisen von minderer Qualität sein, da bis zum Nennbetrieb kein Fluß in ihm auftritt. Auch kann der Eisenkern zwecks günstigerer Herstellung aus Blechen geschichtet sein.

Dem eventuellen nichtlinearen Verhalten im Bereich von Nulldurchgängen des Netzstromes wird durch die Tertiärwicklung T mit ohmschem Widerstand $R_T$ in Form des höheren spezifischen Tertiärleiterwiderstands Rechnung getragen. Diese dämpft die Nichtlinearitäten, insbesondere die Überspannungen durch Ausgleichsströme. Damit sie diese Wirkung entfalten kann, ist die Tertiärwicklung T koaxial zur Primärwicklung P, unmittelbar bei ihr im Hohlraum des Eisenkerns Fe untergebracht. Dadurch besteht die geforderte starke magnetische Kopplung mit der Primärwicklung P im Fehlerfall. Nur bei Eisensättigung wird die Tertiärwicklung T von Magnetfluß durchdrungen. Im Normalbetrieb schirmt der umgebende Teil des ungesättigten Eisenkerns Fe ab, bzw. es besteht Flußkompensation zu Null im Eisenkern Fe.

Die Tertiärwicklung T ist schon beim erstmaligen Ansprechen des Kurzschlußstrombegrenzers bedeutend. Ohne tertiären Ausgleichsstrom wäre die transiente Schaltüberspannung bei rascher Stromverringerung im Supraleiterzylinder S beliebig hoch, weil die im Netz induktiv gespeicherte Energie in die Transformatorinduktivität umgeladen werden müßte. Die widerstandsbehaftete Tertiärwicklung T entkoppelt die transienten Vorgänge vom Verhalten der Supraleiterwicklung S.

Der Hohlkern im Bereich der Primärwicklung P erfüllt drei Forderungen gleichzeitig, nämlich den kleinstmöglichen Eisenquerschnitt, den Raum für die Tertiärwicklung T bei gleichzeitiger starker magnetischer Kopplung mit derselben und eine Entkopplung der Sekundärwicklung im Fehlerfall.

Figur 3 zeigt den supraleitenden Kurzschlußstrombegrenzer im elektrischen Ersatzschaltbild. Der Transformator ist durch die beiden veränderlichen Induktivitäten $L_p$ und $L_s$ mit bereichsweise kleinen Querschnitt $A_{Fe}$ aufweisendem Eisenkern Fe dargestellt. Beide Induktivitäten $L_p$, $L_s$ sind über die Gegeninduktivität $M_{ps}$, die stromabhängig ist, gekoppelt. Die Gegeninduktivität $M_{ps}$ verschwindet im Fehlerfall und entkoppelt damit Ls von Lp. Im Idealfall soll sie wie ein Schalter lediglich zwei Zustände einnehmen, ideale magnetische Kopplung bis zum Ansprechstrompegel $I_T$ und völlige magnetische Entkopplung bei Kurzschlußströmen $I > I_T$.

Bezugszeichenliste

| | |
|---|---|
| $A_{Fe}$ | Querschnitt |
| Fe | Eisenkern |
| $I_{lim}$ | begrenzter Kurzschlußstrom |
| $I_N$ | Nennstrom |
| $I_P$ | Primärstrom |
| $I_{skrit}$ | kritischer Strom |
| $I_T$ | Ansprechstrompegel |
| $L_S$ | Spalt |
| $M_{PS}$ | Geaeninduktivität, magnetischer Schalter |
| P | Primärwicklung |
| S | Sekundärwicklung |
| T | Tertiärwicklung |
| Z(t) | Impedanz, Drossel |
| $Z_{lim}$ | Grenzimpedanz |

**Patentansprüche**

1.  Supraleitender Kurzschlußstrombegrenzer nach dem Längstransformatorprinzip für ein Wechselstromnetz, bestehend aus:

    -  einem Eisenkern (Fe) zur Führung des magnetischen Flusses, magnetisch gekoppelt mit
    -  einer am Netz liegenden Primärwicklung (P),
    -  einer supraleitenden, kurzgeschlossenen Sekundärwicklung (S) und
    -  einer normalleitenden, widerstandsbehafteten Tertiärwicklung (T), wobei
    -  der Eisenkern (Fe) stellen- oder bereichsweise einen derart kleinen Querschnitt ($A_{Fe}$) aufweist, daß nach Überschreiten eines Ansprechstrompegels $I_T$ in der Primärwicklung (P) der Eisenkern (Fe) im Bereich des kleinen Querschnitts ($A_{Fe}$) mit weiter zunehmendem Strom in Sättigung geht,
    -  die Sekundärwicklung (S) räumlich entfernt von der Primärwicklung (P) angebracht ist und der von ihr umgebene Teil des Eisenkerns (Fe) durch zwei Spalte (LS) vom übrigen Teil thermisch entkoppelt ist,
    -  die Tertiärwicklung (T) räumlich nahe bei der Primärwicklung (P) angebracht ist, derart, daß sie magnetisch stark mit der Primärspule gekoppelt ist, und daß ihre Wärmekapazität derart bemessen ist, daß sie die im Fehlerfall erzeugte joulesche Wärme aufnehmen kann.

2.  Supraleitender Kurzschlußstrombegrenzer nach Anspruch 1,
    **dadurch gekennzeichnet, daß**
    der Teil des Eisenkerns (Fe), der von der Primärwicklung (P) umgeben ist, hohlzylinderförmig ist und darin die Tertiärwicklung (T) koaxial zur Primärwicklung (P) untergebracht ist.

3.  Supraleitender Kurzschlußstrombegrenzer nach Anspruch 1,
    **dadurch gekennzeichnet, daß**
    die zwei Spalte (LS) Luftspalte sind oder mit einem die Wärme schlecht leitenden Material ausgefüllt sind oder an ihnen die thermische Entkopplung auf Vakuumbasis besteht.

4.  Supraleitender Kurzschlußstrombegrenzer nach Anspruch 3,
    **dadurch gekennzeichnet, daß**
    der Eisenkern (Fe) im Bereich der beiden Wicklungen (P, S) unter Einhaltung der Spannungsfestigkeit zur Vermeidung von Streufluß im Normalbetrieb nah an deren Innendurchmesser reicht.

5.  Supraleitender Kurzschlußstrombegrenzer nach Anspruch 4,
    **dadurch gekennzeichnet, daß**
    die Sekundärwicklung (S) als Kurzschlußzylinder (S) ausgebildet ist und das Supraleitermaterial aus einem Hochtemperatursupraleitermaterial (HTSC) besteht.

**Claims**

1.  Superconducting short circuit current limiter, designed according to the longitudinal transformer principle, for an a.c. network, consisting of:

- an iron core (Fe) for guiding the magnetic flux, coupled magnetically to
- a primary winding (P) connected to the mains,
- a superconducting, short-circuited secondary winding (S), and
- a normally conducting, resistor-bearing tertiary winding (T), where
- the iron core (Fe) has such a small cross section ($A_{Fe}$) at certain points or in certain areas, such that after exceeding a release current limit $I_T$ in the primary winding (P), the iron core (Fe) enters saturation in the range of the small cross section ($A_{Fe}$) with a further increase in the current,
- the secondary winding (S) is installed far away from the primary winding (P) and that part of the iron core (Fe), which is surrounded by it, is thermally decoupled from the remaining part by two gaps (LS),
- the tertiary winding (T) is located closely to the primary winding (P), such that it is strongly coupled magnetically to the primary coil and its thermal capacity allows to take up the Joule's heat generated in case of failure.

2. Superconducting short circuit current limiter according to Claim 1, **characterized by** that part of the iron core (Fe), which is surrounded by the primary winding (P), having the shape of a hollow cylinder and accommodating the tertiary winding (T) coaxially to the primary winding (P).

3. Superconducting short circuit current limiter according to Claim 1, **characterized by** the two gaps (LS) being air gaps or filled with a material that is a bad heat conductor or them providing for a thermal decoupling on the basis of a vacuum.

4. Superconducting short circuit current limiter according to Claim 3, **characterized by** the iron core (Fe) in the range of both windings (P, S) nearly reaching their internal diameter, while the electric strength to prevent leakage flux in normal operation is maintained.

5. Superconducting short circuit current limiter according to Claim 4, **characterized by** the secondary winding (S) being designed as a short circuit cylinder (S) and the superconducting material representing a high-temperature superconducting material (HTSC).

**Revendications**

1. Limiteur supraconducteur de courant de court-circuit selon le principe du transformateur longitudinal, pour un réseau à courant alternatif, comprenant

   - un noyau de fer (Fe) pour conduire le flux magnétique, ce noyau étant couplé à
   - un enroulement primaire (P) monté dans le réseau,
   - un enroulement secondaire (S) supraconducteur, court-circuité, et
   - un enroulement tertiaire (T) normalement conducteur mais présentant une résistance, et
   - le noyau de fer (Fe) présente par endroits ou par zones une section réduite ($A_{Fe}$) telle qu'après dépassement d'un niveau de courant de déclenchement ($I_T$) dans l'enroulement primaire (P), le noyau de fer (Fe) se sature dans la zone de la petite section ($A_{Fe}$) pour les courants croissants,
   - l'enroulement secondaire (S) est éloigné de l'enroulement primaire (P), et la partie du noyau de fer (Fe) qui l'entoure est découplée thermiquement des autres parties par deux intervalles (LS),
   - l'enroulement tertiaire (T) est situé à proximité de l'enroulement primaire (P) pour être fortement couplé magnétiquement à l'enroulement primaire et pour que sa capacité calorifique soit dimensionnée de façon à pouvoir recevoir la chaleur dégagée par effet Joule en cas de défaut.

2. Limiteur supraconducteur de courant de court-circuit selon la revendication 1, **caractérisé en ce que** la partie du noyau de fer (Fe) qui est entourée par l'enroulement primaire (P) a la forme d'un cylindre creux logeant coaxialement l'enroulement tertiaire (T) par rapport à l'enroulement primaire (P).

3. Limiteur supraconducteur de courant de court-circuit selon la revendication 1, **caractérisé en ce que** les deux intervalles (LS) sont des entrefers ou sont remplis d'une matière mauvaise conductrice thermique, ou encore le découplage thermique est réalisé par le vide.

4. Limiteur supraconducteur de courant de court-circuit selon la revendication 3, **caractérisé en ce que** dans la zone des deux enroulements (P, S), le noyau de fer (Fe) est proche du diamètre intérieur de ses enroulements en respectant la tenue en tension pour éviter le flux parasite en fonctionnement normal.

**5.** Limiteur supraconducteur de courant de court-circuit selon la revendication 4,
**caractérisé en ce que**
l'enroulement secondaire (S) est réalisé comme un cylindre de court-circuit (S) et la matière supraconductrice est une matière supraconductrice à haute température (HTSC).

## Fig. 1

## Fig. 2

# Fig. 3

L

$I_p$

Fe

$L_p$

$L_s$

Supraleiter $\int \pm I_{skrit}$

$I_s$

MPS